# EUROPÄISCHE PATENTANMELDUNG

(11) **EP 2 141 114 A1**
(43) Veröffentlichungstag der Anmeldung: **06.01.2010**
(21) Anmeldenummer: 09008499.7
(22) Anmeldetag: 30.06.2009
(51) Int. Cl.: B66F 3/35, B66F 11/04, B64B 1/40, E01D 19/10, E04G 1/22, B66F 7/16, B66F 19/00

(54) **Verfahren und Vorrichtung zur Arbeit in großen Höhen**

(30) Priorität: 01.07.2008 DE 102008002924
(71) Anmelder: Aerobotics GmbH, 04229 Leipzig (DE)
(72) Erfinder: Bendix, Horst, Prof. Dr.-Ing., 04205 Leipzig (DE); Modes, Henrik, 04229 Leipzig (DE)
(74) Vertreter: Wablat, Wolfgang

(57) **Zusammenfassung**

Die Erfindung betrifft ein Verfahren und eine Vorrichtung zur Arbeit in großen Höhen mit einer von einem mit einem Gas leichter als Luft gefüllten Auftriebskörper getragenen Arbeitspositionierung.

Die Erfindung mit einer Arbeitspositionierung, mit einem oder mehreren Arbeitsplätzen im Bereich der Oberseite eines Auftriebskörpers soll mit geringen Anforderungen an die bediente Konstruktion und Arbeitskräfte, geringer Rüstzeit, niedrigen Kosten und

Einhaltung der Sicherheitsbestimmungen den Zugang auch zu bisher unzugänglichen Arbeitsregionen ermöglichen.

Nach der Erfindung ist mindestens eine für mindestens eine Arbeitskraft und/oder technisch/ technologische Ausrüstung nutzbare Arbeitspositionierung (5) auch im Bereich oberhalb des Schwerpunktes auf der Oberfläche des/der Auftriebskörper (1) positionierbar. Der, die Arbeitspositionierung (5) tragende Auftriebskörper (1) ist im Raum in der X-,Y- und Z-Achse frei positionierbar und in seiner Neigung zumindest zu einem Teil durch die Anwendung von mindestens einem Mittel zur Erzeugung einer den Gleichgewichtszustand eines oder mehrerer Auftriebskörper (1) mit Arbeitspositionierung (5) beeinflussenden Gegenkraft kontrollierbar und in einer stabilen Lage fixierbar.

Die Erfindung kann für Aufgaben im Freien an Bauwerken jeder Art oder im Innern von Gebäuden unabhängig von Höhe, Weite und Beschaffenheit eingesetzt werden. So können unter anderem Restaurationen im Inneren historischer Gebäude durchgeführt werden

## Beschreibung

Die vorliegende Erfindung betrifft ein Verfahren und eine Vorrichtung zur Arbeit in großen Höhen mit einer Arbeitspositionierung, die von einem mit einem Gas leichter als Luft gefüllten Auftriebskörper getragen wird.

Allgemein bekannt ist, Höhenarbeiten von selbstfahrenden, abstütz-, teleskopier- und drehbaren Arbeitsbühnen von der Auslegerspitze aus auszuführen. Die Einsetzbarkeit ist auf die erreichbare Höhe und Weite beschränkt. Diese Arbeitsbühnen besitzen eine hohe Eigenmasse und Baumaße in Höhe, Breite und Länge, die ihren Einsatz in Gebäuden durch Türmaße und Deckentragfähigkeiten häufig unmöglich machen. Weiterhin erfordert der Einsatz von Hub-/Arbeitsbühnen lange Planungs- und Rüstzeiten, die zusätzliche Kosten verursachen.

Bekannt ist auch, Höhenarbeiten dort, wo Arbeitsbühnen/ Gerüst zu teuer, zu schwer oder nicht ausreichend sind, durch seilunterstützende Arbeitstechnologien auszuführen. Diese Arbeitsweise erfordert stets den Gegenpol der Befestigung des benutzen Seilschemas und gestattet aussschließlich Höhenarbeiten unterhalb der obersten Befestigung.

In schwer zugänglichen Bereichen ist dagegen der Einsatz von Alpintechnikern möglich. Er erfordert jedoch zunächst, dass ein Seilzugang zur betreffenden Stelle gefunden werden muss, was insbesondere bei Deckenkonstruktionen beispielsweise in Kirchen nicht gegeben ist. Insbesondere sind für die Anschlagpunkte statisch nachweisbare Lasten von mindestens 800kp je Alpintechniker zu erbringen. Damit summiert sich die Lastannahme auf ein nicht zu erbringendes Maß. Desweiteren ist der Einsatz von Alpintechnikern auf 2 Stunden Arbeitszeit täglich aus arbeitsmedizinischen Gründen beschränkt. Arbeiten wie Inspektionen können durch Alpintechniker nur mit Zusatzausbildung und nur unter stark erschwerten Bedingungen durchgeführt werden. Der Seilzugang ermöglicht es nicht, Fachkräften ohne Kenntnis der Alpintechnik Zugriff auf betroffene Stellen und Arbeitsmöglichkeit zu verschaffen.

Bekannt sind aus den Patentschriften RU 2 204 526 C1 und WO 2004 022 970 Vorrichtungen, die einen mit einem Gas leichter als Luft gefüllten Auftriebskörper zur Neutralisation des Gewichtes des Arbeitsplatzes und darin tätiger Personen verwenden. Die Vorrichtungen können damit auf die bei Hubbühnen üblichen Stahlkonstruktionen verzichten, die Höhe ihres Arbeitsplatzes durch den Einsatz von Seilen kontrollieren und ermöglichen in einer Ausführung eine Arbeitspositionierung oberseitig des Auftriebskörpers. Beide Vorrichtungen erfordern aber einen Kontakt zur bedienten Konstruktion, um den Arbeitsplatz in der Arbeitsregion zu positionieren und die nötige Arbeitshöhe zu erreichen. Sie können damit nur durch Auf- und Abstieg nahe der bedienten Konstruktion in der Vertikalen und im von der vertikalen Führung aus erreichbaren Aktionsradius agieren.
In der WO 2004 022 970 wurde die Form des Auftriebskörpers speziell für einen Führungskontakt so gestaltet, dass er den Kontakt mit den Rotorflügeln einer Windkraftanlage und eine Positionierung in der Vertikalen ermöglicht. Da die beschriebene Vorrichtung diesen Kontakt zum Erreichen der Arbeitshöhe unbedingt benötigt, ergibt sich eine Beschränkung auf Windräder oder formverwandte Konstruktionen.
Die RU 2 204 526 C1 nutzt weniger spezifische Führungskontakte um eine Positionierung nahe an der bedienten Konstruktion zu gewährleisten. Um den Arbeitsplatz in die nötige Arbeitshöhe und Positionierung zu bringen, müssen die Führungskontakte vor dem Aufstieg angebracht werden und während des Aufstiegs stets den nahen Kontakt zur bedienten Konstruktion gewährleisten.
Die Vorrichtungen nach RU 2 204 526 C1 wie auch WO 2004 022 970 stellen erhöhte Anforderungen an die bediente Konstruktion, die die Verbindung der Vorrichtung über Führungskontakte gestatten muss. Damit erhöht sich die Rüstzeit für beide Vorrichtungen, zusätzliche Kosten entstehen, die erreichbaren Arbeitsregionen werden eingeschränkt und erhöhte Anforderungen an die Arbeitskräfte gestellt. Eine Tätigkeit ist nur dort möglich, wo eine geeignete Führung in der Vertikalen aufgebaut werden kann. Arbeitsregionen, die horizontal verlaufen und keinen regelmäßigen vertikalen Zugang ermöglichen, wie Gebäudedecken, können nur im beschränkten Aktionsradius der vertikalen Führung bedient werden. Das bedeutet, dass insbesondere im Innenbereich, unter anderem von Stadien und Kirchen, aber auch im Außenbereich die Bedingungen für den sicheren Einsatz von Mensch und Material nur in wenigen Fällen gegeben sind oder der Zugang zu den arbeitsrelevanten Stellen nicht möglich ist.

Aus der DE 102 10 542 A1 ist ein als traggasgefüllter Ballon eingesetzter fernsteuerbarer Kameraträger bekannt. Im Bereich des Äquators des Ballons sind eine Kamera und auf der Gegenseite ein Rotationsantrieb-Nicken starr sowie jeweils um 90° versetzt je ein Drehgelenk und an diesen die Enden eines mit einer Plattform verbundenen Bügels mit je einem Rotationsantrieb-Gieren an der Hülle angeordnet. Um ein Kippmoment um die x-Achse zu vermeiden, müssen die Gewichte der Kamera und des Rotationsantriebes-Nicken gleich sein. Die Plattform enthält auch mindestens einen Vertikal-Antrieb zum Manövrieren in die erforderliche Höhe. Über den Rotationsantrieb-Nicken ist ein Kippen in der x-Achse möglich. Die Rotationsantriebe-Gieren ermöglichen einen Vortrieb in der Horizontalen sowie ein Drehen um die y-Achse. Durch eine getrennte Steuerung/Drehzahlregelung der einzelnen Antriebe kann der Ballon in der jeweiligen Lage relativ stabil gehalten werden. Diese Anordnung ist nur für eine fernsteuerbare Kamera im Bereich des Äquators des Ballons, nicht aber oberhalb möglich. Damit ist der Zugang zu vielen arbeitsrelevanten Stellen ausgeschlossen.

Der Erfindung liegt das Problem zugrunde, ein Verfahren und eine Vorrichtung zur Arbeit in großen Höhen mit einer Arbeitspositionierung mit einem oder mehreren Arbeitsplätzen im Bereich der Oberseite eines durch ein Gas leichter als Luft getragenen Auftriebskörpers vorzuschlagen, die mit geringen Anforderungen an die bediente Konstruktion und Arbeitskräfte, geringer Rüstzeit, niedrigen Kosten und strikter Einhaltung der Sicherheitsbestimmungen den Zugang auch zu bisher unzugänglichen Arbeitsregionen ermöglichen.

Das Problem wird erfindungsgemäß durch die Merkmale der Patentansprüche 1 und 11 gelöst. Weiterbildungen der Erfindung sind in den abhängigen Ansprüchen beschrieben.

Die Erfindung geht von der Erkenntnis aus, dass ein mit einem Gas leichter als Luft gefüllte Auftriebskörper für sich selbst, keinen definierten Gleichgewichtszustand besitzt, der ein sicheres Arbeiten in großer Höhe ermöglicht, wenn ein oder mehrere Arbeitsplätze im Bereich der Oberseite des gasgefüllten Auftriebskörpers positioniert werden sollen.
Die oberseitige Nutzung des gasgefüllten Auftriebskörpers für Arbeiten in großer Höhe setzt jedoch ein definiertes, stabiles Gleichgewicht des Auftriebskörpers voraus, damit die Arbeit oberseitig des gasgefüllten Auftriebskörpers mit definierter Sicherheit für Menschen sowie Maschinen erfolgen kann.
Der Stand der Technik wendet zum Gewährleisten der nötigen Sicherheit statische Führungskontakte an, durch welche die Bewegungsgrade des in einem instabilen Gleichgewichtszustand befindlichen Auftriebskörpers soweit beschränkt werden, dass ein sicheres Arbeiten trotz des instabilen Gleichgewichtszustandes möglich wird. Der Stand der Technik beschränkt demgemäß nur die Bewegungsgrade, die einem Auftriebskörper im instabilen Gleichgewichtszustand verfügbar sind. Er vermag jedoch nicht, den Gleichgewichtszustand selbst zu stabilisieren oder einen definierten Gleichgewichtszustand und damit eine definierte Neigung des oberseitigen Arbeitsplatzes kontrolliert herbeizuführen.
Der Erfindung liegt dagegen die Idee zugrunde, dass ein definierter und stabiler Gleichgewichtszustand des Auftriebsköpers selbst hergestellt werden kann, wenn eine Kraft am Auftriebskörper angewandt wird, welche den Gleichgewichtszustand des Auftriebskörpers kontrolliert und stabil hält, anstatt die Bewegungsgrade eines im instabilen Gleichgewichtszustandes befindlichen Auftriebsköpers zu beschränken.

Nach dem Verfahren zur Arbeit in großen Höhen mit einer Arbeitspositionierung, die von einem mit einem Gas leichter als Luft gefüllten Auftriebskörper getragen wird, wird erfindungsgemäß mindestens ein Auftriebskörper mit mindestens einer Arbeitspositionierung für mindestens eine Arbeitskraft und/oder technisch / technologische Ausrüstung genutzt. Dazu wird die Arbeitspositionierung auch im Bereich oberhalb des Schwerpunktes auf der Oberfläche des/der Auftriebskörper positioniert, welcher/ welche frei im Raum in der X-,Y- und Z-Achse positioniert und in seiner/ ihrer Neigung zumindest zu einem Teil durch die Anwendung von mindestens einer den Gleichgewichtszustand des Auftriebskörpers beeinflussenden statischen und/oder dynamischen Gegenkraft kontrolliert und in einer stabilen Lage gehalten wird.

Nach der Erfindung ist die Gegenkraft um einen Sicherheitsfaktor größer als diejenige Kraft, die einer den Gleichgewichtszustand des Auftriebskörpers mit Arbeitspositionierung destabilisierenden Kraft entspricht.

Unter einer den Gleichgewichtszustand des Auftriebskörpers beeinflussenden Gegenkraft wird eine jede Kraft oder eine jede, sich aus mehreren Kraftkomponenten zusammensetzende resultierende Kraft verstanden, welche durch Wirkung am Auftriebskörper das resultierende Kräftegleichgewicht in einer Weise kontrollierbar macht, die den Gleichgewichtszustand des Auftriebskörpers stabilisiert, einen definierten Gleichgewichtszustand und damit eine definierte Neigung des oberseitigen Arbeitsplatzes herstellbar macht oder beides erwirkt durch Kontrolle der Größe, der Kraft selbst oder der Größe von mindestens einer Kraftkomponente für den Fall, dass die den Gleichgewichtszustand beeinflussende Kraft eine Resultierende mehrerer Kraftkomponente ist.

Erfindungsgemäss wird die den Gleichgewichtszustand des Auftriebskörpers beeinflussende Kraft durch die Gegenkraft eines oder mehrerer Gewichte aufgrund seiner Masse erzeugt. In der Erfindung übernimmt das Gewicht weitere Funktionen, wobei die erforderliche Gegenkraft zumindest zu einem Teil aber auch vollständig durch die für diese Funktionen nötigen Bestandteile erwirkt wird.

In Ausgestaltung der Erfindung ist eine solche Kraft die Gewichtskraft eines im Inneren, an der Oberfläche des Auftriebskörpers, in Abstand von der Oberfläche des Auftriebskörpers integrierten Gewichtes oder vieler integrierter Gewichte an Kombinationen dieser Positionen.

Als zweckmäßigste Ausgestaltung wird ein solches Gewicht im praktisch maximal möglichen Abstand von der Oberfläche des Auftriebskörpers über drei feste Stützglieder als Verbindung von Auftriebskörper und Gewicht eingesetzt, wobei das Maximum unter anderem durch die Arbeitshöhe und die Stärke der eingesetzten Verbindung von Auftriebskörper und Gewicht bestimmt wird.
Unter feste Stützglieder sind solche zu verstehen, die druck-, knick- und zugfest sind.

Die Vorrichtung zur Arbeit in großen Höhen mit einer Arbeitspositionierung, die von einem mit einem Gas leichter als Luft gefüllten Auftriebskörper getragen wird, enthält nach der Erfindung mindestens einen Auftriebskörper mit mindestens einer für mindestens eine Arbeitskraft und/oder technisch/ technologische Ausrüstung nutzbaren Arbeitspositionierung, die auch im Bereich oberhalb des Schwerpunktes auf der Oberfläche des/der Auftriebskörper positionierbar ist, welcher / welche frei im Raum in der X-,Y- und Z-Achse positionierbar und in seiner / ihrer Neigung zumindest zu einem Teil durch die Anwendung von mindestens einem Mittel zur Erzeugung einer den Gleichgewichtszustand eines oder mehrerer Auftriebskörper mit Arbeitspositionierung beeinflussenden statischen und/oder dynamischen Gegenkraft kontrolliert und in einer stabilen Lage gehalten wird.

In Ausgestaltung der Erfindung ist die Position des Arbeitsplatzes oberseitig des Auftriebskörpers flexibel gestaltbar. Werden in einer erfindungsgemässen Vorrichtung ein oder mehrere Arbeitskräfte eingesetzt, ist der Arbeitsplatz bevorzugt oberseitig des Auftriebskörpers als eine Arbeitsplattform und an der Oberfläche des Auftriebskörpers angelegt. Aufgrund kompakter Bauart liegt der Arbeitsplatz für den alleinigen Einsatz von Maschinen und Geräten wie Roboter usw. auf einer einfachen Tragkonstruktion, bevorzugt oberseitig des Auftriebskörpers im Inneren des Auftriebskörpers.

In weiterer Ausgestaltung ist die Form des Auftriebskörpers und sein Volumen in der Konstruktion gemäß den Erfordernissen der Praxis herstellbar. Bevorzugt läuft sie dann in zumindest einem Teil spitz zu, wenn die Vorrichtung im Inneren von Gebäuden insbesondere in Ecken eingesetzt werden soll.

Die Lenkung einer erfindungsgemässen Vorrichtung wird bevorzugt durch drei all-terrain-vehicle durchgeführt, welche die Positionierung im Raum in X-,Y- und Z-Achse ohne starke Luftbewegung ermöglichen. Eine Fernsteuerung ist auch möglich. Erfindungsgemäss können jedoch zur Positionierung auch andere für die Leichter als Luft-Technik geeignete Elemente zum Einsatz kommen, wie Propeller oder Sogturbinen. Die Mittel zur Erzeugung einer den Gleichgewichtszustand eines oder mehrerer Auftriebskörper beeinflussenden Kraft umschliessen, zuletzt alle dem Fachmann bekannten Vorrichtungen, die eine definierte, eine nach Impulsen steuerbare oder eine aus der Kombination beider entstehende resultierende Kraft am Auftriebskörper zu erzeugen fähig sind.

Es ist erfindungsgemäss möglich, aber aufgrund der erschwerten Bedienbarkeit nicht bevorzugt, dass das Mittel zur Erzeugung der den Gleichgewichtszustand eines oder mehrerer Auftriebskörper beeinflussenden Kraft ebenso zur Positionierung im Raum in X-,Y- und Z-Achse verwandt wird.

Im Gegensatz zu Vorrichtungen des Standes der Technik sind die erfindungsgemäßen Vorrichtungen nicht auf starre Führungen angewiesen, um eine Arbeitshöhe zu erreichen, sich zu positionieren oder die Sicherheit für Mensch sowie Material und technisch / technologische Einrichtungen zu gewährleisten.
In Ausgestaltung der Erfindung ist es jedoch möglich, Führungen dort anzuwenden, wo Arbeiten, welche auf Basis der erfindungsgemäss stabilisierten Vorrichtungen durchgeführt werden, effizienter gestaltet werden können. In diesem Fall sind Führungen optionaler Bestandteil und übernehmen nicht die für den Stand der Technik betriebsnotwendigen Funktionen der Stabilisierung und starren Beschränkungen des Auftriebskörpers. Arbeiten, welche durch den Einsatz von Führungen erleichtert werden, sind insbesondere Analysen auf Basis automatisierter Sensortechnik, bei welcher Führungen die Lokalisierung der Analysedaten und ihre Auswertung vereinfachen. So wird u.a. bei Oberflächenanalysen der Rechenaufwand reduziert, wenn Führungen eingesetzt werden.

Eine starre Führung im Sinne der Erfindung kann sowohl am unterseitigen Gewicht, als auch an Konstruktionselementen der Arbeitspositionierung als auch über Schleifrollen geführt, direkt am Auftriebskörper selbst angebracht werden. Die Führung selbst kann den Erfordernissen angepasst werden und ist im einfachsten Fall eine Seilkonstruktion.

Die erfindungsgemäßen Vorrichtungen mit Arbeitspositionierung oberseits des Auftriebskörpers sind flexibler einsetzbar, können auch schwer zugängliche Stellen erreichen und benötigen eine wesentlich geringere Rüstzeit, wodurch ihre Kosteneffizienz steigt. Die prinzipielle Unabhängigkeit von Führungskonstruktionen bedingt zudem, dass auch Arbeitsregionen bedient werden können, für die der Stand der Technik keine Lösungen kannte, wie Decken oder Regionen in der Horizontalen, z.B. Brückenunterseiten. Durch gezielte Einstellung der Neigung kann der Arbeitsradius erweitert werden.
Die Erfindung kann auch für Aufgaben im Freien an Bauwerken jeder Art oder im Innern von Gebäuden unabhängig von Höhe, Weite und Beschaffenheit mit geringem Rüst- und Kostenaufwand eingesetzt werden. Sie eignen sich insbesondere dort, wo der Stand der Technik keinen Zugang finden konnte, er aber in der Praxis notwendig ist. So können unter anderem Arbeiten im Inneren historischer Gebäude durchgeführt werden, die durch die aus Gerüsten entstehenden hohen Kosten und die notwendige Schliessung des Gebäudes zu deren Aufbau unfinanzierbar waren und der Stand der Technik keine Alternativen kannte.

Die Erfindung wird nachfolgend an einem Ausführungsbeispiel näher erläutert. In den zugehörigen Zeichnungen zeigen:
- Fig.1:: eine erfindungsgemäße Vorrichtung mit einem Gewicht unterseitig des Auftriebskörpers und mit einem mittig orientierten Arbeitsplatz oberseitig eines Auftriebskörpers
- Fig 2:: eine erfindungsgemäße Vorrichtung mit einem Gewicht an drei druckfesten Stützgliedern in Abstand zur Oberfläche des Auftriebskörpers und mit einem mittig orientierten Arbeitsplatz oberseitig eines Auftriebskörpers
- Fig 3:: eine erfindungsgemäße Vorrichtung mit einem Gewicht im Inneren des Auftriebkörpers und mit einem mittig orientierten Arbeitsplatz oberseitig eines Auftriebskörpers
- Fig 4:: eine erfindungsgemäße Vorrichtung mit drei mit dem Auftriebskörper verbundenen teleskopierbaren Armen enthaltenden all-terrain-vehicles
- Fig 5:: eine erfindungsgemäße Vorrichtung in der Draufsicht, mit einem oberseits, fern der Mitte eines sich tropfenförmig verjüngenden und spitz zulaufenden Auftriebskörpers positionierten Arbeitsplatzes und drei all-terrain-vehicles

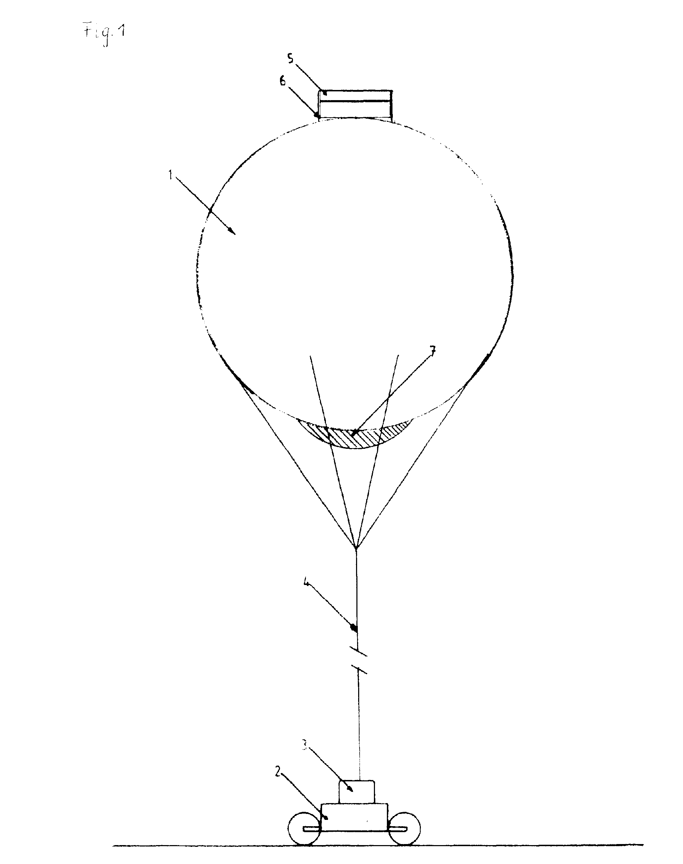

Die Fig. 1 stellt eine erfindungsgemäße Lösung nach Variante 1 dar. Der Arbeitsplatz 5 ist über dem Auftriebskörper 1 mittig auf einem Luftkissen 6 plaziert. Das Seil 4 kann über die Winde 3 eingeholt werden, die auf dem all-terrain-vehicle 2 angebracht und damit im Gelände manövrierbar ist. Unterseitig der Oberfläche des Auftriebskörpers 1 ist ein Gewicht 7 befestigt. Diese erfindungsgemäße Lösung wird bevorzugt zu Inspektionen an Deckenkonstruktionen im Innenbereich verwandt, die eine längerfristige Stationierung und geringe Veränderungen der Position entlang der inspizierten Deckenkonstruktion benötigen.

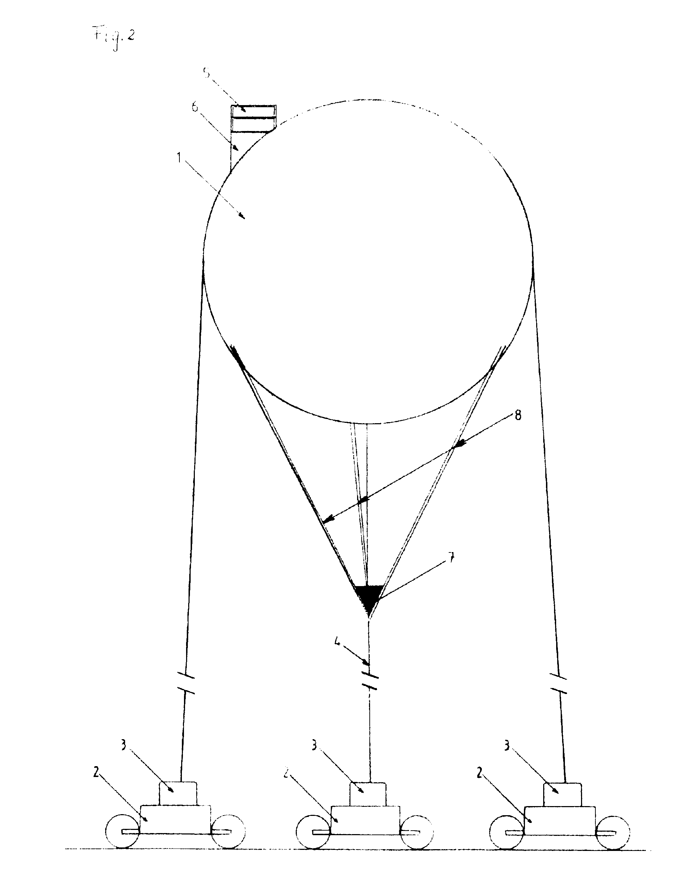

Die Fig. 2 stellt eine erfindungsgemäße Lösung nach Variante 2 dar. Der Arbeitsplatz 5 ist über dem Auftriebskörper 1 an einer Außenseite auf einem Luftkissen 6 plaziert. Drei Seile 4 sind über die Winden 3 einholbar, die auf den all-terrain-vehicles 2 angebracht sind. Die Stellung der vehiclee zueinander ermöglicht es, die Positionierung der Vorrichtung im Raum flexibel zu verändern. Das Gewicht 7 ist befestigt an drei druckfesten Stützgliedern 8 im Abstand zur Oberfläche des Auftriebskörpers 1 in die Vorrichtung integriert. Über die mit dem Auftriebskörper 1 verbundenen Stützglieder 8 sind die drei Seile 4 mit dem Auftriebskörper 1 verbunden. Das Gewicht 7 an den drei Stützgliedern 8 kann durch seinen Abstand zur Oberfläche des Auftriebskörpers 1 kleiner gewählt werden, wodurch die Belastungskapazität im Arbeitsplatz steigt. Bevorzugt kann das Verhältnis von Gewicht zu Oberfläche des Auftriebskörpers eingestellt werden. Es beträgt vorzugsweise einen eineinhalbfachen Durchmesser des Auftriebskörpers 1. Am meisten bevorzugt geschieht dies durch teleskopierbare Stützglieder 8, wobei diese zudem für Start und Landung der Vorrichtung eingefahren werden können und den Betrieb erleichtern.
Diese erfindungsgemäße Lösung wird bevorzugt dort angewandt, wo Arbeiten im Innen- und Außenbereich mehrere Personen im Arbeitsbereich, zusätzliches Material oder beides benötigen.

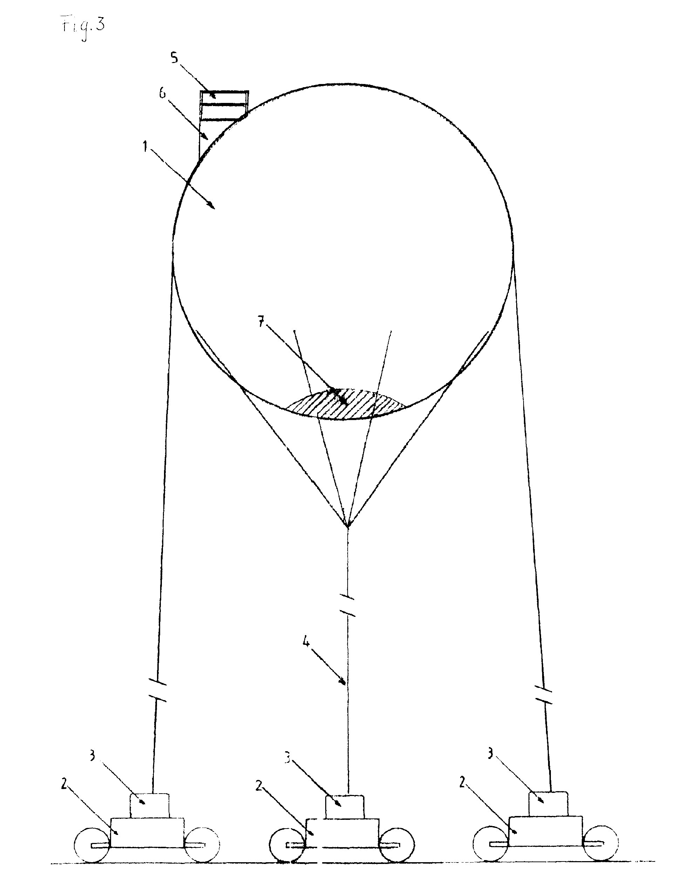

Die Fig. 3 stellt eine erfindungsgemäße Lösung nach Variante 3 dar. Der Arbeitsplatz 5 ist über dem Auftriebskörper 1 an einer Außenseite auf einem Luftkissen 6 plaziert. Der Auftriebskörper wird über ein im Inneren des Auftriebskörpers 1 integriertes Gewicht 7 stabilisiert. Über die Winden 3 sind drei Seile 4 einholbar. Sie sind auf den all-terrain-vehicles 2 angebracht. Die Positionierung der Vorrichtung im Raum in X-,Y- und Z-Achse kann flexibel durch die Stellung der vehicle zueinander und Veränderung der Seillängen geändert und im Voraus berechnet werden. Durch die Seile 3 kann zudem die Höhe der Vorrichtung über die Winden 3 kontrolliert werden. Diese erfindungsgemäße Lösung eignet sich durch ihren kompakten Aufbau und ihre einfache Handhabung für Arbeiten wie Inspektionen, Kontrollen oder andere Arbeiten durch Fachpersonal oder Dienstleister, bei denen eine einfache Bauweise, optimierte Transportfähigkeit und schnelle Einarbeitung notwendig werden.

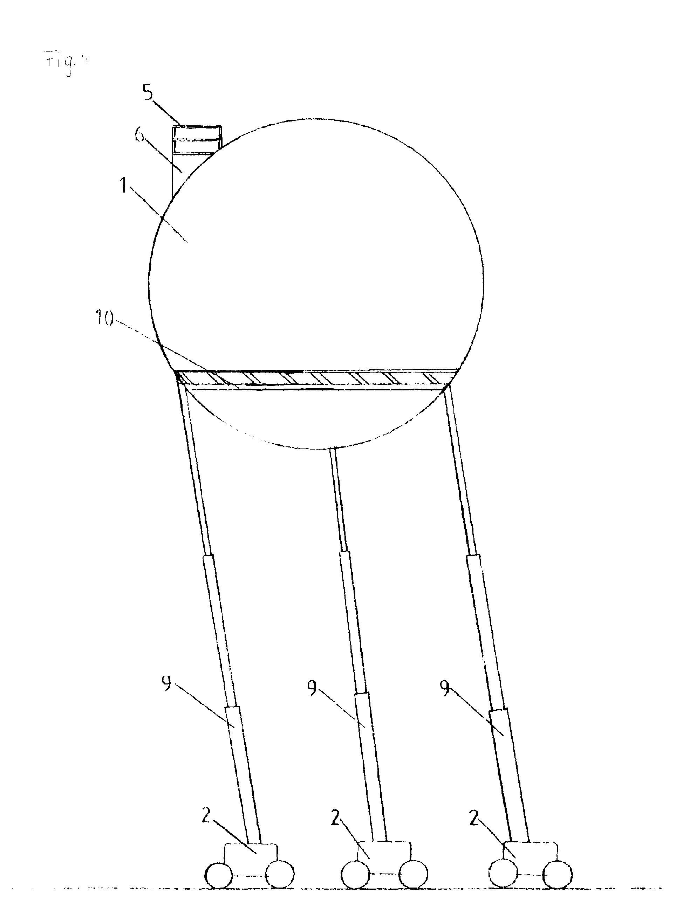

Die Fig. 4 stellt eine erfindungsmäße Lösung nach Variante 4 dar, wobei die den Gleichgewichtszustand des Auftriebskörpers 1 beeinflussende Kraft, die durch das Eigengewicht der drei all-terrain-vehicles 2 erwirkte Gewichtskraft ist. Über drei teleskopierbare Arme 9 sind die drei all-terrain-vehicles 2 mit dem Auftriebskörper 1 verbunden. Durch die Stellung sowie das Einfahren und Ausfahren der teleskopierbaren Arme 9 wird die Positionierung der Vorrichtung in X-,Y- und Z-Achse, sowie die Neigung der Vorrichtung kontrolliert. Über eine Befestigung 10 sind die drei teleskopierbaren Arme 9 mit dem Auftriebskörper 1 verbunden und ermöglichen so die Übertragung der durch das Eigengewicht der drei all-terrain-vehicles 2 erwirkten Kraft zur Beeinflussung des Gleichgewichtszustandes des Auftriebskörpers 1. Die erfindungsgemäße Lösung wird so bevorzugt im Innenbereich angewandt, wo die Positionierung der all-terrain-vehicles 2 durch Hindernisse begrenzt ist.

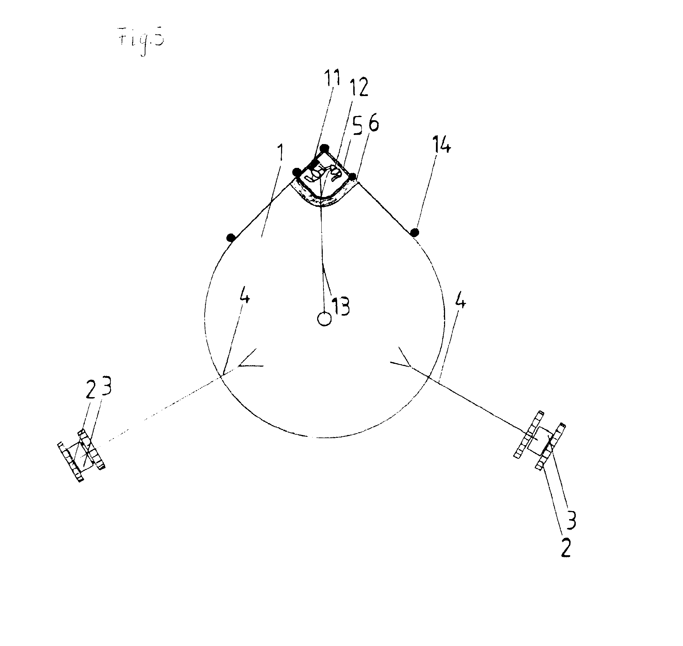

Die Fig. 5 zeigt eine erfindungsgemäße Vorrichtung in der Draufsicht, wobei der Auftriebskörper 1 sich tropfenförmig verjüngt und spitz zuläuft und an seiner Spitze fern der Mitte den Arbeitsplatz 5 trägt. Im Arbeitsplatz 5 sind die arbeitenden Personen über je eine Persönliche Schutzausrüstung gegen Absturz (PSA) 12 sowie ein Rückhaltesystem 13 gesichert, welche durch die Steuerung 11 die Position sowie Neigung der Vorrichtung kontrollieren können. Entlang der Vorrichtung sind zum Schutz des Auftriebskörpers 1 Schleifrollen 14 angebracht. Über die Position der all-terrain-vehicles 2 und die Länge der durch die Winden 3 einholbaren Windenseile 4 kann die Position sowie die Neigung der Vorrichtung kontrolliert werden. Diese erfindungsgemäße Vorrichtung wird bevorzugt dort im Innenbereich eingesetzt, wo Arbeiten in Ecken durchgeführt werden und mehrfache Umpositionierungen notwendig sind, so in stark unterteilten Räumen wie u.a. in Kirchen.

Bezugszeichenaufstellung
- 1: Auftriebskörper gefüllt mit einem Gas leichter als Luft
- 2: all-terrain-vehicle
- 3: Windenkasten
- 4: Windenseil
- 5: Arbeitsplatzpositionierung/Arbeitsplattform
- 6: Luftkissen
- 7: Gewicht
- 8: Stützglieder
- 9: teleskopierbare Arme
- 10: Befestigung
- 11: Steuerung
- 12: Persönliche-Schutzausrüstung gegen Absturz (PSA)
- 13: Rückhaltesystem
- 14: Schleifrollen

## Patentansprüche

1. Verfahren zur Arbeit in großen Höhen mit einer Arbeitspositionierung, die von einem mit einem Gas leichter als Luft gefüllten Auftriebskörper getragen wird, **dadurch gekennzeichnet, dass** mindestens ein Auftriebskörper (1) mit mindestens einer Arbeitspositionierung (5), die für mindestens eine Arbeitskraft und/oder technisch / technologische Ausrüstung auch im Bereich oberhalb des Schwerpunktes auf der Oberfläche des/der Auftriebskörper (1) genutzt wird, im Raum in der X-,Y- und Z-Achse frei positioniert wird und in seiner Neigung zumindest zu einem Teil durch die Anwendung von mindestens einer den Gleichgewichtszustand des Auftriebskörpers (1) beeinflussenden statischen und/oder dynamischen Gegenkraft kontrolliert und in einer stabilen Lage gehalten wird.

2. Verfahren nach Anspruch 1, **dadurch gekennzeichnet, dass** die Gegenkraft um einen Sicherheitsfaktor größer als diejenige Kraft ist, die einer den Gleichgewichtszustand des Auftriebskörpers (1) mit Arbeitspositionierung (5) destabilisierenden Kraft entspricht.

3. Verfahren nach den Ansprüchen 1 und 2, **dadurch gekennzeichnet, dass** die den Gleichgewichtszustand des Auftriebskörpers (1) beeinflussende Kraft durch die Gegenkraft eines oder mehrerer Gewichte (7) erzeugt wird.

4. Verfahren nach den Ansprüchen 1 - 3, **dadurch gekennzeichnet, dass** die Gegenkraft zu mindestens einem Teil durch ein unterseits des Auftriebskörpers (1) etwa an der Oberfläche des Auftriebskörpers (1) integriertes Gewicht (7) erzeugt wird.

5. Verfahren nach den Ansprüchen 1 - 4, **dadurch gekennzeichnet, dass** die Gegenkraft zu mindestens einem Teil durch ein im Inneren des Auftriebskörpers (1) integriertes Gewicht (7) erzeugt wird.

6. Verfahren nach den Ansprüchen 1 - 5, **dadurch gekennzeichnet, dass** die Gegenkraft zu mindestens einem Teil durch ein an mindestens 3 festen Stützgliedern (8) befestigtes Gewicht (7) in Abstand von der Oberfläche des Auftriebskörpers (1) erzeugt wird.

7. Verfahren nach den Ansprüchen 1 - 6, **dadurch gekennzeichnet, dass** die Position frei im Raum in der X-,Y- und Z-Achse und/oder die Neigung durch die Plazierung von mindestens einem Fahrzeug (2) im Raum in der X-,Y- und Z-Achse kontrolliert und festgelegt wird.

8. Verfahren nach den Ansprüchen 1 und 7, **dadurch gekennzeichnet, dass** die Position frei im Raum in der X-,Y- und Z-Achse und/oder die Neigung aus den Koordinaten des Fahrzeugs (2) und den Längen / Längenänderungen von mindestens einem der Windenseile (4) berechnet wird.

9. Verfahren nach den Ansprüchen 1 und 7, **dadurch gekennzeichnet, dass** die Position frei im Raum in der X-,Y-und Z-Achse und/oder die Neigung durch die Stellung sowie durch das Einfahren und Ausfahren mindestens eines teleskopierbaren Armes (9) eines all-terrain-vehicles (2) kontrolliert und festgelegt wird.

10. Verfahren nach den Ansprüchen 1 und 2, **dadurch gekennzeichnet, dass** die den Gleichgewichtszustand des Auftriebskörpers (1) mit der Arbeitspositionierung (5) beeinflussende Kraft die durch das Eigengewicht zumindest dreier all-terrain-vehicle (2) erwirkte Gegenkraft ist und die Gegenkraft über zumindest drei teleskopierbare Arme (9) zur Kontrolle des Gleichgewichtszustandes des Auftriebskörpers (1) auf den Auftriebskörper (1) übertragen wird.

11. Vorrichtung zur Arbeit in großen Höhen mit einer Arbeitspositionierung, die von einem mit einem Gas leichter als Luft gefüllten Auftriebskörper getragen wird, **dadurch gekennzeichnet, dass** mindestens ein Auftriebskörper (1) mindestens eine für mindestens eine Arbeitskraft und/oder technisch/ technologische Ausrüstung nutzbare Arbeitspositionierung (5) trägt, welche auch im Bereich oberhalb des Schwerpunktes auf der Oberfläche des/der Auftriebskörper (1) einsetzbar ist, wobei der / die Auftriebskörper 1 im Raum in der X-,Y- und Z-Achse frei positionierbar sind und in seiner / ihrer Neigung zumindest zu einem Teil durch die Anwendung von mindestens einem Mittel zur Erzeugung einer den Gleichgewichtszustand eines oder mehrerer Auftriebskörper (1) mit Arbeitspositionierung (5) beeinflussenden statischen und/ oder dynamischen Gegenkraft kontrollierbar und in einer stabilen Lage fixierbar ist.

12. Vorrichtung nach Anspruch 11, **dadurch gekennzeichnet, dass** die Arbeitspositionierung (5) eine Arbeitsplattform, einen Träger, eine Traverse, eine Schiene und einen Bügel umfasst.

13. Vorrichtung nach Anspruch 11, **dadurch gekennzeichnet, dass** das Mittel zur Erzeugung einer den Gleichgewichtszustand eines oder mehrerer Auftriebskörper (1) mit Arbeitsplattform (5) beeinflussenden Gegenkraft mindestens ein Gewicht (7) ist.

14. Vorrichtung nach Anspruch 13, **dadurch gekennzeichnet, dass** ein Gewicht (7) unterseits des Auftriebskörpers (1) etwa an der Oberfläche des Auftriebskörpers (1) angeordnet ist.

15. Vorrichtung nach Anspruch 13, **dadurch gekennzeichnet, dass** ein Gewicht (7) im Inneren des Auftriebskörpers (1) angeordnet ist.

16. Vorrichtung nach Anspruch 13, **dadurch gekennzeichnet, dass** ein Gewicht (7) an mindestens 3 festen Stützgliedern (8) in Abstand der Oberfläche des Auftriebskörpers (1) angeordnet ist.

17. Vorrichtung nach Anspruch 16, **dadurch gekennzeichnet, dass** der Abstand eines an mindestens drei festen Stützgliedern (8) befestigtien Gewichtes (7) von der Oberfläche des Auftriebskörpers (1) mindestens einen eineinhalbfachen Durchmesser des Auftriebskörpers (1) beträgt.

18. Vorrichtung nach den Ansprüchen 13 und 17 **dadurch gekennzeichnet, dass** die Distanz des Gewichtes (7) zur Oberfläche des Auftriebskörpers (1) verstellbar ist.

19. Vorrichtung nach Anspruch 16, **dadurch gekennzeichnet, dass** die Stützglieder (8) teleskopierbar sind.

20. Vorrichtung nach den Ansprüchen 16, 18 und 19, **dadurch gekennzeichnet, dass** die Gewichte (7) entläng der festen Stützglieder (8) verstellbar sind

21. Vorrichtung nach den Ansprüchen 11 - 20, **dadurch gekennzeichnet, dass** das Mittel zur Erzeugung einer den Gleichgewichtszustand eines oder mehrerer Auftriebskörper (1) mit Arbeitspositionierung (5) beeinflussenden Gegenkraft mindestens zwei Gewichte (7) sind.

22. Vorrichtung nach den Ansprüchen 11 und 16 - 21 **dadurch gekennzeichnet, dass** zur Positionierung des Auftriebskörpers (1) mit Arbeitspositionierung (5) frei im Raum in der X-,Y-und Z-Achse und/oder zur Kontrolle der Neigung mindestens ein Fahrzeug (2) mit oder ohne eigenen Antrieb angeordnet ist.

23. Vorrichtung nach den Ansprüche 11 und 16 - 22, **dadurch gekennzeichnet, dass** zur Positionierung des Auftriebskörpers (1) mit Arbeitspositionierung (5) frei im Raum in der X-,Y- und Z-Achse und/oder zur Kontrolle der Neigung mindestens ein teleskopierbarer Arm (9) eines Fahrzeugs (2) eingesetzt ist.

24. Vorrichtung nach den Ansprüchen 11 und 16 - 23, **dadurch gekennzeichnet, dass** das Mittel zur Erzeugung einer den Gleichgewichtszustand eines oder mehrerer Auftriebskörper (1) mit Arbeitspositionierung (5) beeinflussenden Gegenkraft zumindest drei Fahrzeuge (2) sind, die über zumindest drei über eine Befestigung (10) mit dem Auftriebskörper (1) verbundene teleskopierbare Arme (9) mit dem Auftriebskörper (1) verbunden sind.

25. Vorrichtung nach den Ansprüche 22 - 24, **dadurch gekennzeichnet, dass** ein Fahrzeug (2) ein all-terrain-vehicle ist.

26. Vorrichtung nach den Ansprüchen 11 - 25, **dadurch gekennzeichnet, dass** als Arbeitspositionierung (5) ein Arbeitsplatz mittig an der Oberseite des mit einem Gas leichter als Luft gefüllten Auftriebskörpers (1) integriert ist und der Auftriebskörper (1) durch ein über drei Stützglieder (8) mit dem Auftriebskörper (1) verbundenes Gewicht (7) stabilisiert und mit drei Seilen (4) über Winden (3) mit drei all-terrain vehiclen (2) zur Positionierung frei im Raum in der X-,Y- und Z-Achse verbunden ist.

27. Vorrichtung nach den Ansprüchen 22, 25 und 26, **dadurch gekennzeichnet, dass** die Positionierung frei im Raum in der X-,Y- und Z-Achse und/oder die Neigung aus den Koordinaten der all-terrain-vehicle (2) und den Längen / Längenänderungen der Seile (4) der Winden (3) berechenbar ist.

28. Vorrichtung nach den Ansprüchen 11 - 25, **dadurch gekennzeichnet, dass** als Arbeitspositionierung (5) ein Arbeitsplatz an der Oberseite und fern der Mitte des mit einem Gas leichter als Luft gefüllten Auftriebskörpers (1) integriert ist, wobei der Auftriebskörper (1) mit einem Seil (4) über eine Winde (3) mit einem all-terrain vehicle (2) zur Positionierung frei im Raum in der X-,Y- und Z-Achse verbunden ist und durch ein an der Unterseite des Auftriebskörpers (1) integriertes Gewicht (7) stabilisierbar ist.

29. Vorrichtung nach den Ansprüchen 11 - 25, **dadurch gekennzeichnet, dass** als Arbeitspositionierung (5) ein Arbeitsplatz an der Oberseite des mit einem Gas leichter als Luft gefüllten Auftriebskörpers (1) intergiert ist, welcher über drei Seile (4) mit drei all-terrain vehicles (2) zur Positionierung frei im Raum in der X,Y und Z-Achse verbunden und durch ein im Inneren des Auftriebskörpers (1) integriertes Gewicht (7) stabilisierbar ist.

30. Vorrichtung nach den Ansprüchen 11 - 25, **dadurch gekennzeichnet, dass** als Arbeitspositionierung (5) ein Arbeitsplatz an der Oberseite des mit einem Gas leichter als Luft gefüllten Auftriebskörpers (1) intergiert ist, welcher über drei teleskopierbare Arme (9) mit drei all-terrain vehicles (2) zur Positionierung frei im Raum in der X-,Y- und Z-Achse verbunden und durch das Eigengewicht der drei all-terrain-vehicle (2) stabilisierbar ist.

31. Vorrichtung nach den Ansprüchen 11 bis 30, **dadurch gekennzeichnet, dass** die Form der mit einem Gas leichter als Luft gefüllten Auftriebskörper (1) für die Hauptanwendungsfälle im Rahmen der technologischen Möglichkeiten auswählbar ist.

32. Vorrichtung nach den Ansprüchen 11 bis 31, **dadurch gekennzeichnet, dass** der mit einem Gas leichter als Luft gefüllte Auftriebskörper (1) etwa die Grundform eines sich nach unten verjüngenden Tropfens und in der Draufsicht einen bogenförmigen Verlauf mit einer nahezu rechtwinkligen Spitze mit der Arbeitspositionierung (5) aufweist.
